# EUROPEAN PATENT APPLICATION

(11) **EP 2 264 980 A1**
(43) Date of publication of application: **22.12.2010**
(21) Application number: 10164832.7
(22) Date of filing: 03.06.2010
(51) Int. Cl.: H04L 29/08, H04L 12/28, H04L 12/56, H04W 4/04, H04W 48/18, H04W 88/06, G07C 5/00

(54) **Intelligent user-vehicle communication system and method thereof**

(30) Priority: 17.06.2009 US 486102
(71) Applicant: Delphi Technologies, Inc., Troy, MI 48007 (US)
(72) Inventor: Tieman, Craig A., Westfield, IN 46074 (US); Oman, Todd P., Greentown, IN 46936 (US); Sultan, Michel F., Troy, MI 48098 (US); Partin, Dale L., Ray Township, MI 48096 (US)
(74) Representative: Denton, Michael John

(57) **Abstract**

An intelligent communication system (100) used with a vehicle (106) and method (300) thereof are provided, wherein the system (100) includes a vehicle-installed telematics unit (102), and a nomadic device (104) in communication with the vehicle-installed telematics unit (102) via a plurality of different communication paths. The nomadic device (104) is modified by including a software routine that is executed to determine which of the plurality of communication paths is to be used based upon a proximity between the nomadic device (104) and the vehicle-installed telematics unit (102) when a user of the nomadic device (104) instructs the nomadic device (104) to communicate with the vehicle-installed telematics unit (102).

## Description

### Field of the Invention

The present invention generally relates to a communication system and method thereof, and more particularly, an intelligent communication system used with a vehicle and method of intelligently communicating between a nomadic device and a vehicle-installed telematics unit.

### Background of the Invention

Generally, consumers on the go oftentimes wish to monitor, interrogate, and/or control remote stationary or mobile systems from anywhere, at any time, even when they are away from their home or the office. There is a variety of reasons for this desire, including the need to check on the status of a home security system or the battery of a car parked at the airport, to monitor environments where a child or an elderly parent is being cared for, to view the interior or exterior of their vehicle to insure that it is not being tampered with, to start their vehicle, to cool down or heat up the vehicle interior, to unlock the doors before reaching the vehicle, to prepare coffee before arriving at home, to open a garage door, to check the diagnostic status of the vehicle before a trip, or to provide notification of events affecting the vehicle, such as, an intrusion or towing attempt, a diagnostic condition such as a flat tire or dead battery, or that a vehicle's climate control system has prepared that vehicle for travel.

In particular, consumers owning a vehicle typically carry a key fob to perform some of the vehicle-related functions described above; but these functions are normally restricted to functions that require only short range, one-way communication to the vehicle. Generally, these functions include the remote access of the vehicle functions, such as unlocking or locking the vehicle doors, unlocking the rear hatch or trunk, remotely starting the vehicle engine, or activating the vehicle horn and lights. In order to broaden the range of applications of such key fobs, recent trends have been to add greater range, bidirectional communication, and to add a display to indicate vehicle information. Since these control functions require more energy and power, the current trend is to make the fob battery rechargeable. These fobs also tend to be larger, heavier, and more expensive.

Generally, a medium-range remote access and control of a motor vehicle can be achieved with a user-carried RF transceiver such as a so-called "smart key fob." For example, the fob can be used not only to gain entry to the vehicle, but also to start the engine and access vehicle status information. Similar functionality can be achieved with a specially programmed personal communication device such as a cell phone or personal digital assistant (PDA), as described for example in U.S. Patent No. 6,970,703, entitled "Integrated Personal Communications System and Method" and U.S. Patent No. 7,224,262, entitled "Wireless Vehicle Control System and Method," the entire disclosures of which are hereby incorporated herein by reference.

Both of the above-described approaches have drawbacks. For example, smart key fobs tend to become both too large and too expensive when human-machine interface (HMI) devices such as keypads and displays are integrated into the fob. Additionally, requiring the vehicle operator to use a specially programmed personal communication device and to pay for cellular network service is also undesirable.

### Summary of the Invention

According to one aspect of the present invention, an intelligent communication system used with a vehicle includes a vehicle-installed telematics unit and a nomadic device in communication with the vehicle-installed telematics unit via a plurality of different communication paths, wherein the nomadic device is modified by including a software routine that is executed to determine which of the plurality of communication paths is to be used based upon a proximity between the nomadic device and the vehicle-installed telematics unit when a user of the nomadic device instructs the nomadic device to communicate with the vehicle-installed telematics unit.

According to another aspect of the present invention, a method of intelligently communicating between a modified nomadic device and a vehicle-installed telematics unit, wherein the nomadic device is modified by having an executable software routine for intelligent selection of a communication path, includes the steps of authorizing the nomadic device to communicate with the vehicle-installed telematics unit, determining a proximity between the nomadic device and the vehicle-installed telematics unit, communicating via a short-range RF network to the vehicle-installed telematics unit when it is determined that the nomadic device and the vehicle-installed telematics unit are approximately within a first proximity, communicating via a medium-range RF network when it is determined that the nomadic device and the vehicle-installed telematics unit are approximately beyond the first proximity and approximately within a second proximity, and communicating via a global-range RF network when it is determined that the nomadic device and the vehicle-installed telematics unit are approximately beyond the second proximity and approximately within a third proximity.

These and other features, advantages, and objects of the present invention will be further understood and appreciated by those skilled in the art by reference to the following specification, claims, and appended drawings.

### Brief Description of the Drawings

The present invention will now be described, by way of example, with reference to the accompanying drawings, in which:

Fig. 1 is a diagram illustrating an intelligent communication system, in accordance with one embodiment of the present invention;

Fig. 2 is a diagram illustrating an intelligent communication system, in accordance with one embodiment of the present invention;

Fig. 3A is a flow chart illustrating a portion of a method of intelligently communicating between a modified nomadic device and a vehicle-installed telematics unit, in accordance with one embodiment of the present invention; and

Fig. 3B is a flow chart illustrating another portion of the method of intelligently communicating between a modified nomadic device and a vehicle-installed telematics unit, in accordance with one embodiment of the present invention.

### Description of Embodiments

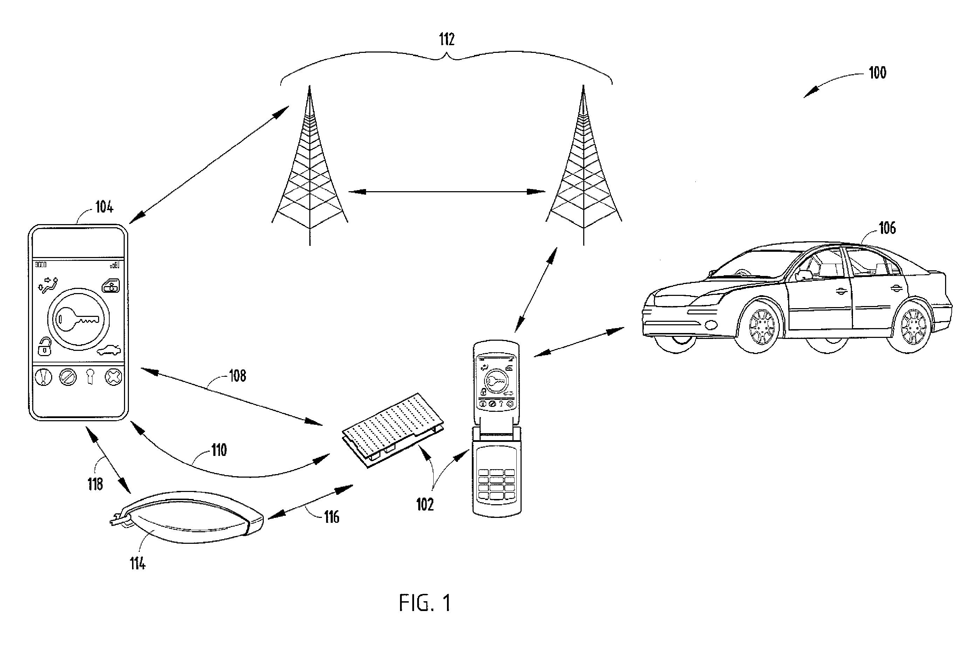

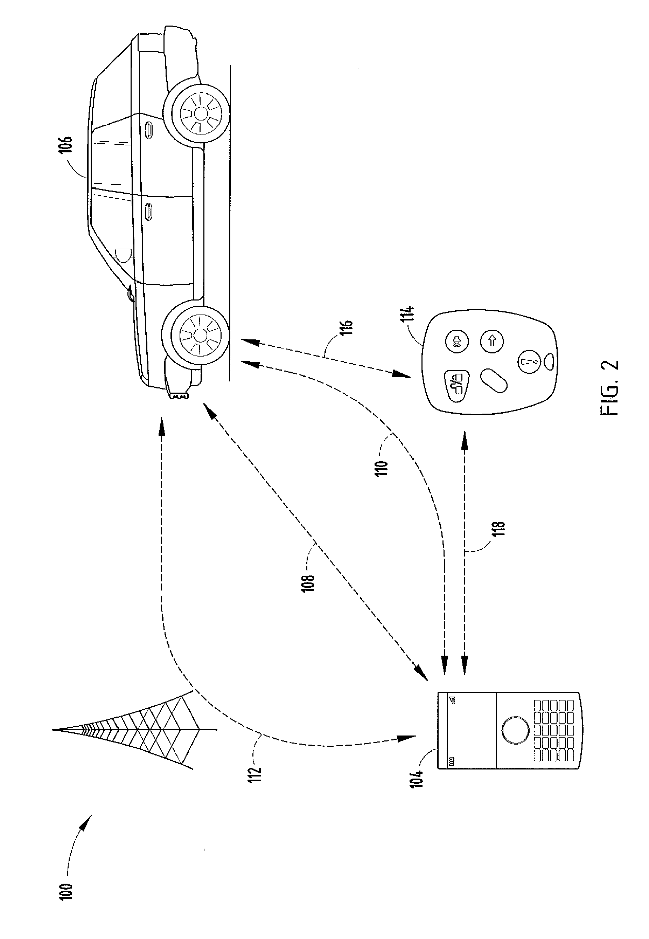

In regards to both Figs. 1 and 2, an intelligent communication system used with a vehicle is generally shown at reference identifier 100. The system 100 includes a vehicle-installed telematics unit, generally indicated in Fig. 1 at reference identifier 102, and a nomadic device 104 in communication with the vehicle-installed telematics unit 102. The vehicle-installed telematics unit 102 and the nomadic device 104 communicate via a plurality of different communication paths, wherein the nomadic device 104 is modified by including one or more software routines that are executed to determine which of the plurality of communication paths is to be used based upon a proximity between the nomadic device 104 and the vehicle-installed telematics unit 102 when a user of the nomadic device 104 instructs the nomadic device 104 to communicate with the vehicle-installed telematics unit 102, as discussed in greater detail herein.

Thus, the nomadic device 104 can communicate with the vehicle-installed telematics unit 102 to control operations or devices on a vehicle 106. Typically the nomadic device 104 is modified by downloading one or more executable software routines, which, when executed, determine an efficient communication path to utilize between the nomadic device 104 and the vehicle-installed telematics unit 102. For purposes of explanation and not limitation, efficiency can include a latency in a communication path, a cost associated with using a communication path, the like, or a combination thereof. Further, the modification of the nomadic device 104 can include having security data for authorizing communication between the vehicle-installed telematics unit 102 and nomadic device 104. By way of explanation and not limitation, the nomadic device 104 can be a cellular phone, a personal digital assistant (PDA), a smartphone, portable computers, laptops, the like, or a combination thereof. Thus, the system 100 can allow a user to have persistent wireless communication capability between the nomadic device 104 and the vehicle-installed telematics unit 102 with redundancy and substantially unlimited range, control and display capability through the nomadic device 104, the ability to seek an optimal communication path between the vehicle-installed telematics unit 102, the ability to use a vehicle authorization to secure communications, the like, or a combination thereof.

According to one embodiment, the plurality of communication paths include a short-range RF network or link 108, a medium-range RF network or link 110, and a global-range RF network or link 112. Typically, the plurality of communication paths are prioritized so that the different communication paths can be utilized to increase benefits of the particular communication path (e.g., select an efficient communication path). The short-range RF network 108 can be a first priority communication path, the medium-range RF network 110 can be a second priority communication path, and the global-range RF network 112 can be a third priority communication path. In such an embodiment, the nomadic device 104 can communicate with the vehicle-installed telematics unit 102 via the short-range RF network 108 when the nomadic device 104 is approximately within a first proximity of the vehicle-installed telematics unit 102. Also, the nomadic device 104 can communicate with the vehicle-installed telematics unit 102 via the medium-range RF network 110 when the nomadic device 104 is approximately beyond the first proximity of the vehicle-installed telematics unit 102, and approximately within a second proximity of the vehicle-installed telematics unit 102. Additionally, the nomadic device 104 can communicate with the vehicle-installed telematics unit 102 via the global-range RF network 112 when the nomadic device 104 is approximately beyond a second proximity of the vehicle-installed telematics unit 102, and approximately within a third proximity of the vehicle-installed telematics unit 102.

According to one embodiment, the short-range RF network 108 is a BLUETOOTH^{™} network, which typically has a range of less than ten meters (10 m) for Class 2 devices. In such an exemplary embodiment, the first proximity can be a radius of approximately ten meters (10 m) from the vehicle-installed telematics unit 102. Other suitable wireless networks 108 can include, but are not limited to, Institute of Electrical and Electronics Engineers (IEEE) 802.11 (Wi-Fi), Near Field Communications (NFC), the like, or a combination thereof.

The medium-range RF network 110 can be an RF signal, which can have a range of approximately less than one thousand meters (1000 m). In such an embodiment, the second proximity can be a radius of approximately one thousand meters (1000 m), which can exclude the area of the first proximity. Thus, the medium-range RF network 110 can be used when the nomadic device 104 is approximately within the first proximity, but there may be benefits to using the short-range RF network 108 rather than the medium-range RF network 110 in such a scenario. By way of explanation and not limitation, the medium-range RF network 110 can include signals having a frequency of three hundred fifteen megahertz (315 MHz), four hundred thirty-three megahertz (433 MHz), eight hundred sixty-eight megahertz (868 MHz), other suitable frequencies, or a combination thereof.

The global-range RF network 112 can be a cellular network, which can have a substantially unlimited range, such that the third proximity is anywhere not covered approximately by the first and second proximities. It should be appreciated by those skilled in the art that the global-range RF network 112 can be other suitable types of networks with substantially unlimited range, such as, but not limited to, a satellite communication network. Thus, the global-range RF network 112 can be used when the nomadic device 104 is approximately within the first and second proximities, but there may be benefits to using the short-range RF network 108 or the medium-range RF network 110 in such scenarios.

The system 100 can further include a fob 114 configured to communicate with the vehicle-installed telematics unit 102 and the nomadic device 104 via at least a portion of the plurality of communication paths. The fob 114 can be used as an intermediary of communication between the nomadic device 104 and the vehicle-installed telematics unit 102 (e.g., the medium-range RF network 110). In such an embodiment, the nomadic device 104 can communicate with the fob 114 via the short-range RF network 108, and the fob 114 can communicate with the vehicle-installed telematics unit 102 via the medium-range RF network 110. Thus, the nomadic device 104 may not include hardware and/or an executable software routine for communicating via the medium-range RF network 110. However, it should be appreciated by those skilled in the art that if the fob 114 is not included in the system 100, or even if the fob 114 is included in the system 100, the nomadic device 104 can include hardware and/or an executable software routine for communicating with the vehicle-installed telematics unit 102 via the medium-range RF network 110. The fob 114 can also be configured to individually communicate with the vehicle-installed telematics unit 102 and nomadic device 104 (e.g., not acting as an intermediary to the vehicle-installed telematics unit 102 and the nomadic device 104) as represented by communication links 116 and 118 in Fig. 2, respectively.

According to one embodiment, the fob 114 can include securing data for authorizing communication between the vehicle-installed telematics unit 102 and the nomadic device 104. Typically, the security data for authorizing communication between the vehicle-installed telematics unit 102 and the nomadic device 104 provides security that undesired nomadic devices 104 (e.g., nomadic devices used by people not authorized to use the vehicle 106) cannot communicate with the vehicle-installed telematics unit 102. Thus, the security data can include, but is not limited to, an electronic key that is unique to the vehicle-installed telematics unit 102.

The fob 114 can be a remote keyless entry (RKE), a passive keyless entry (PKE), other suitable devices configured to direct RF links and compatible with the vehicle-installed telematics unit 102 or other vehicle communication devices for controlling components on the vehicle 106 (e.g., lock the doors, unlock the doors, panic, engine start, etc.), or a combination thereof, according to one embodiment. In such an embodiment, the nomadic device 104 can communicate with the vehicle-installed telematics unit 102 through the fob 114. The nomadic device 104 can communicate with the fob 114 via the wireless network 108, and the fob 114 can then communicate with the vehicle-installed telematics unit 102. Thus, the fob 114 can perform typical vehicle 106 access functions and the nomadic device 104 can provide enhanced commands, control, data access functions, and functions that the fob 114 is otherwise not capable of performing. The nomadic device 104 can also provide other functions not typically included in the fob 114, such as, but not limited to, a display screen, audible sounds, additional user input controls, the like, or a combination thereof. Further, the fob 114 can include the security data for authorizing the communication with the vehicle-installed telematics unit 102, as set by the original equipment manufacturer (OEM).

According to one embodiment, the nomadic device 104 includes a memory device configured to store the security data and the capability of communicating via the medium-range RF 110, such that the fob 114 is not included in the system 100, or is included in the system 100, but not used for providing the security data. By way of explanation and not limitation, the nomadic device 104 can receive and store the security data via the NFC, wherein the port for receiving the NFC communication is located in an interior of the vehicle 106. Thus, the nomadic device 104 includes the security data and the capability of communicating via the medium-range RF 110. According to one embodiment, the memory device for storing the security data of the nomadic device 104 is removable, such that the memory device can be, but it not limited to, a subscriber identity module (SIM) or SIM card, a removable flash device, the like, or a combination thereof.

Whether the fob 114 is included in the system 100 or not, the communication paths (e.g., the short-range RF network 108, the medium-range RF network 110, and the global-range RF network 112) can be two-way communication paths, such that the nomadic device 104 communicates with the vehicle-installed telematics unit 102 (e.g., a command from a user of the nomadic device 108), and the vehicle-installed telematics unit 102 communicates with the nomadic device 104 (e.g., download data, download vehicle 106 diagnostic information, vehicle initiated communication, etc.), according to one embodiment. Exemplary vehicle-installed telematics 102, nomadic device 104, and fobs 114 are described in U.S. Patent Application Publication No. 2009/00965757, entitled "Vehicle Remote Access and Control Apparatus and Communications Gateway," U.S. Patent Application No. 12/150,972, entitled "Remote Monitoring, Interrogation, and Control Apparatus for Stationary and Mobile Systems," U.S. Patent Application No. 12/150,968, entitled "Method and Apparatus for Remote Vehicle Communications and Control," U.S. Patent Application Publication No. 2009/0096596, entitled "Apparatus for Medium-Range Vehicle Communications and Control," U.S. Patent Application Publication No. 2009/0096576, entitled "Fault Tolerant Vehicle Communication and Control Apparatus," U.S. Patent Application Serial No. 12/362,629, entitled "Multi-Purpose Fob System," and U.S. Patent Application Serial No. 12/416,304, entitled "Vehicle Key Fob Having Audio File Storage," all of which the entire disclosures are hereby incorporated herein by reference.

It should be appreciated by those skilled in the art that the vehicle-installed telematics unit 102 can be at least partially permanently installed, at least partially removably installed, or a combination thereof. Thus, a user of the system 100 can install at least a portion of the vehicle-installed telematics unit, a manufacturer of the vehicle 106 can install at least a portion of the vehicle-installed telematics unit 102, or a combination thereof. It should further be appreciated by those skilled in the art that the vehicle-installed telematics unit 102 can include separate transceivers, receivers, modems, or the like for each network (e.g., the short-range RF network 108, the medium-range RF network 110, and the global-range RF network 112), or that at least a portion of the networks can utilize the same electrical or electronic components included in the vehicle-installed telematics unit 102. According to one embodiment, the vehicle-installed telematics unit 102 includes a cellular telephone or similar communication device placed into the vehicle 106 by a user of the system 100.

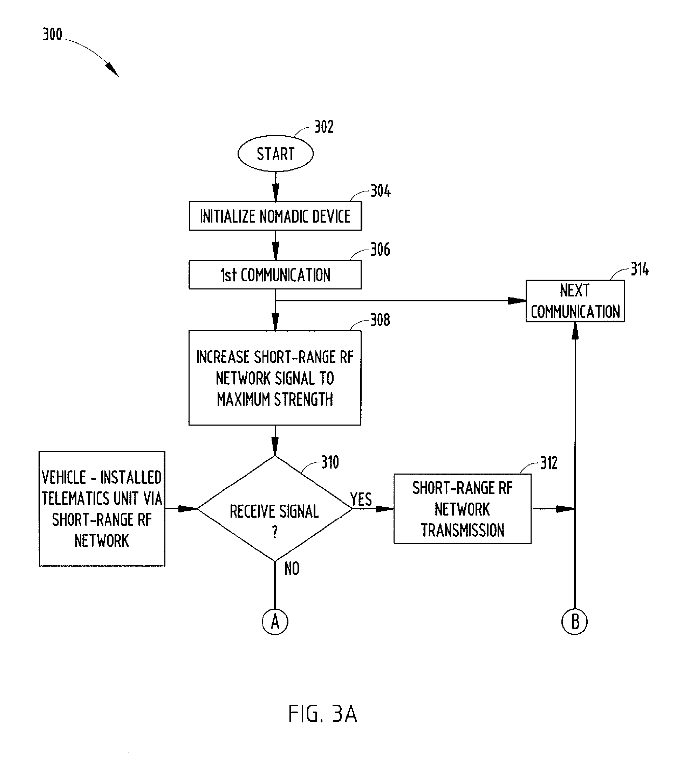

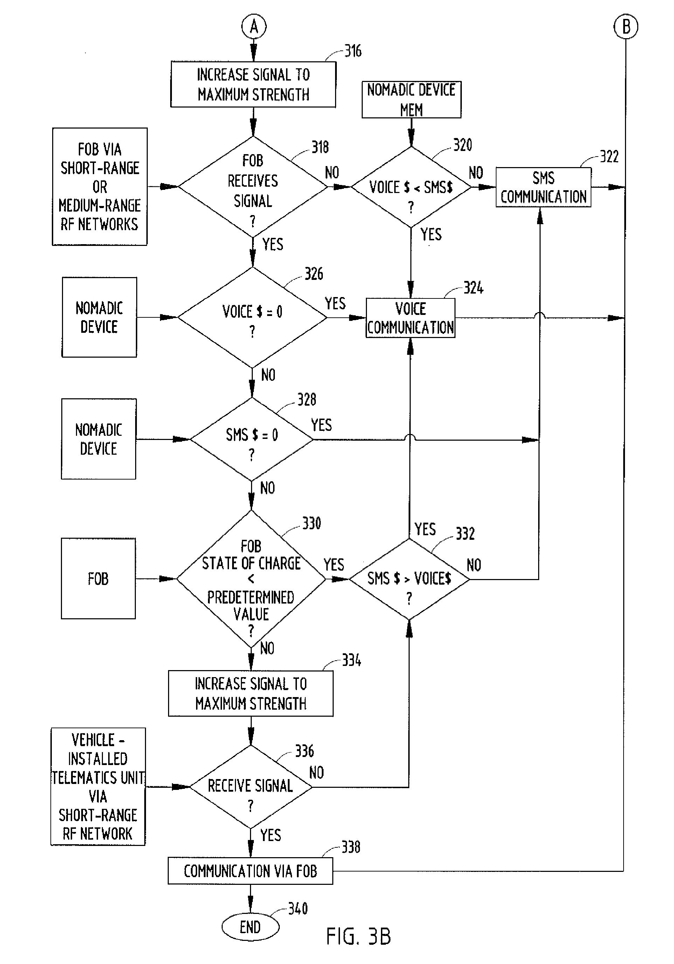

In regards to Figs. 1-3, a method of intelligently communicating between a modified nomadic device 104 and the vehicle-installed telematics unit 102, wherein the nomadic device 104 is modified by including an executable software routine for intelligent selection of a communication path, is generally shown in Fig. 3 at reference identifier 300. The method 300 starts at step 302, and proceeds to step 304, wherein the nomadic device 104 is initialized. The initialization of the nomadic device 104 can include, but is not limited to, authorizing the nomadic device 104 to communicate with the vehicle-installed telematics unit 102. The authorizing of the nomadic device 104 can include the nomadic device 104 including the security data, or the nomadic device 104 communicating with the vehicle-installed telematics unit 102 through the fob 114.

In step 306, the first communication is transmitted from the nomadic device 104 to the vehicle-installed telematics unit 102. At step 308, the wireless network 108 signal is increased to its maximum signal strength. At decision step 310 it is determined if the vehicle-installed telematics unit 102 receives the signal transmitted via the wireless network 108. If it is determined at decision step 310 that the vehicle-installed telematics unit 102 receives the wireless network 108 communication, then the method 300 proceeds to step 312, wherein the nomadic device 104 continues to communicate with the vehicle-installed telematics unit 102 via the wireless network 108. Further, the method 300 can proceed to step 314, wherein the next communication between the nomadic device 104 and vehicle-installed telematics unit 102 can be communicated using the same communication path, which in this exemplary scenario, would be the wireless network 108.

However, if it is determined at decision step 310 that the vehicle-installed telematics unit 102 did not receive the communication via the wireless network 108, then the method 300 then proceeds to step 316. At step 316, the nomadic device 104 communicates with the vehicle-installed telematics unit 102 via the short-range RF network 108, the medium-range RF network 110, or a combination thereof, through the fob 114, wherein the signal strength is increased to a maximum strength. Thus, the nomadic device 104 can communicate with the fob 114 via the short-range RF network 108 or the medium-range RF network 110, and the fob 114 can communicate with the vehicle-installed telematics unit 102 via the short-range RF network 108 or the medium-range RF network 110.

At decision step 318, it is determined if the fob 114 receives the signal from the nomadic device 104. If it is determined at decision step 318 that the fob 114 does not receive the signal from the nomadic device 104, then the method 300 proceeds to decision step 320. At decision step 320, it is determined if the cost for using a frequency designated for voice communication on the global-range RF network 112 is less than the cost for using a frequency designated for short message service (SMS) of the global-range RF network 112. If it is determined that the cost for using the frequency designated for a voice communication on the global network 110 is not less than a cost for utilizing the frequency designated for the SMS communication on the global-range RF network 112, then the method 300 proceeds to step 322, wherein a frequency designated for SMS communication on the global-range RF network 112 is utilized. The method 300 can then proceed to decision step 314. However, if it is determined at decision step 320 that the cost for utilizing a frequency designated for voice communication on a global-range RF network 112 is less than a cost for utilizing frequency designated for SMS communication on a global-range RF network 112, then the method 300 proceeds to step 324, wherein the frequency designated for a voice communication on the global-range RF network 112 is utilized. The method 300 can then proceed to step 314.

However, if it is determined at decision step 318 that the fob 114 does receive the signal from the nomadic device 104, then the method 300 proceeds to decision step 326. At decision step 326, it is determined if the cost for utilizing a frequency designated for a voice communication on a global-range RF network 112 is equal to zero. If it is determined at decision step 326 that the cost for utilizing a frequency designated for a voice communication on the global-range RF network 112 is equal to zero, then the method 300 proceeds to step 324. If it is determined at decision step 326 that the cost for utilizing a frequency designated for a voice communication on the global-range RF network 112 is not equal to zero, then the method 300 proceeds to decision step 328.

At decision step 328 it is determined if a cost for utilizing a frequency designated for SMS communication on the global-range RF network 112 is equal to zero. If it is determined at decision step 328 that the cost for utilizing a frequency designated for SMS communication on the global-range RF network 112 is equal to zero, then the method 300 proceeds to step 322. However, if it is determined at decision step 328 that the cost for utilizing a frequency designated for SMS communication on the global-range RF network 112 is not equal to zero, then the method 300 proceeds to decision step 330.

At decision step 330 it is determined if a state of charge of an energy storage device on a fob 114 is below a predetermined value. Typically, if the state of charge of the energy storage device on the fob 114 is below a predetermined value, then it can be beneficial not to use the fob 114 for communicating with the vehicle-installed telematics unit 102. If it is determined at decision step 330 that the state of charge of an energy storage device on the fob 114 is below a predetermined value, then the method 300 proceeds to decision step 332. At decision step 332 it is determined if the cost for utilizing a frequency designated for a SMS communication on the global-range RF network 112 is greater than the cost for utilizing a frequency designated for voice communication on the global-range RF network 112. Thus, decision step 332 is similar to decision step 320. If it is determined at decision step 332 that the cost for communicating via a frequency designated for SMS communication on the global-range RF network 112 is greater than the cost for utilizing a frequency designated for voice communication on the global-range RF network 112, then the method 300 proceeds to step 324, wherein the frequency designated for voice communication on the global network is used. However, if it is determined at decision step 332 that the cost for utilizing a frequency designated for SMS communication on the global-range RF network 112 is not greater than the cost for utilizing the frequency designated for voice communication on the global-range RF network 112, then the method 300 proceeds to decision step 322, wherein the frequency designated for the SMS communication in the global-range RF network 112 is used.

However, if it is determined at decision step 330 that the state of charge of the energy storage device of the fob 114 is not below a predetermined value, then the method 300 proceeds to step 334. At step 334, the signal strength of the fob 114 is increased to a maximum value. At decision step 336, it is determined if the vehicle-installed telematics unit 102 receives the signal from the fob 114. If it is determined at decision step 336 that the vehicle-installed telematics unit 102 did not receive a signal from the fob 114, then the method 300 proceeds to decision step 332. However, if it is determined at decision step 336 that the vehicle-installed telematics unit 102 did receive the signal transmitted from the fob 114, then the nomadic device 104 continues to communicate with the vehicle-installed telematics unit 102 through the fob 114 at step 338. The method can then proceed to step 314, and the method can end at step 340.

Advantageously, the system 100 and method 300 determine an efficient or beneficial communication path for communicating between the nomadic device 104 and the vehicle-installed telematics unit 102. Thus, the decision as to what communication path to use can be based upon the range of the communication path, the latency associated with the communication path, the cost associated with using the communication path, the like, or a combination thereof. In other words, the global-range RF network 112 can almost always be used to communicate between the nomadic device 104 and the vehicle-installed telematics unit 102, but it can be beneficial to use the other communication paths due to these communication paths having no latency, no cost per use associated to the user, or a combination thereof. It should be appreciated by those skilled in the art that additional or alternative advantages may be present from the system 100 and method 300. It should further be appreciated by those skilled in the art that combinations of elements may be combinable in other ways not explicitly described herein.

Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. An intelligent communication system (100) used with a vehicle (106) comprising:
a vehicle-installed telematics unit (102); and
a nomadic device (104) in communication with said vehicle-installed telematics unit (102) via a plurality of different communication paths, wherein said nomadic device (104) is modified by comprising a software routine that is executed to determine which of said plurality of communication paths is to be used based upon a proximity between said nomadic device (104) and said vehicle-installed telematics unit (102) when a user of said nomadic device (104) instructs said nomadic device (104) to communicate with said vehicle-installed telematics unit (102).

2. The communication system (100) of claim 1, wherein said plurality of communication paths comprise:
a short-range RF network (108);
a medium-range RF network (110); and
a global-range RF network (112).

3. The communication system (100) of claim 2, wherein said short-range RF network (108) is a first priority communication path, said medium-range RF network (110) is a second priority communication path, and said global-range RF network (112) is a third priority communication path.

4. The communication system (100) of claims 2 or 3, wherein said nomadic device (104) communicates with said vehicle-installed telematics unit (102) via said short-range RF network (108) when said nomadic device (104) is approximately within a first proximity of said vehicle-installed telematics unit (102).

5. The communication system (100) of claims 2 or 3, wherein said nomadic device (104) communicates with said vehicle-installed telematics unit (102) via said medium-range RF network (110) when said nomadic device (104) is approximately beyond a first proximity of said vehicle-installed telematics unit (102), and approximately within a second proximity of said vehicle-installed telematics unit (102).

6. The communication system (100) of claims 2 or 3, wherein said nomadic device (104) communicates with said vehicle-installed telematics unit (102) via said global-range RF network (112) when said nomadic device (104) is approximately beyond a second proximity of said vehicle-installed telematics unit (102), and approximately within a third proximity of said vehicle-installed telematics unit (102).

7. The communication system (100) of claims 2 or 3, wherein at least one of said short-range RF network (108) is a BLUETOOTH™ network, and said global-range RF network (112) is a cellular network.

8. The communication system (100) of claims 1, 2, or 3, further comprising a fob (114) configured to communicate with said vehicle-installed telematics unit (102) and said nomadic device (104) via at least a portion of said plurality of communication paths, wherein said fob (114) comprises a memory device configured to store security data for authorizing communication with said vehicle-installed telematics unit (102).

9. The communication system (100) of claims 1, 2, or 3, wherein security data for authorizing communication with said vehicle-installed telematics unit (102) is stored on a media device that can be transferred from said nomadic device (104) to another nomadic device (104).

10. The communication system (100) of claims 1, 2, or 3, wherein said nomadic device (104) comprises at least one of a cellular telephone, a smartphone, a personal digital assistant (PDA), a laptop, and a personal computer.

11. A method (300) of intelligently communicating between a modified nomadic device (104) and a vehicle-installed telematics unit (102), wherein the nomadic device (104) is modified by comprising an executable software routine for intelligent selection of a communication path, said method (300) comprising the steps of:
authorizing (304) the nomadic device (104) to communicate with the vehicle-installed telematics unit (102);
determining a proximity between the nomadic device (104) and the vehicle-installed telematics unit (102);
communicating (312) via a short-range RF network (108) when it is determined that the nomadic device (104) and the vehicle-installed telematics unit (102) are approximately within a first proximity;
communicating via a medium-range RF network (310) when it is determined that the nomadic device (104) and the vehicle-installed telematics unit (102) are approximately beyond said first proximity and approximately within a second proximity; and
communicating (332, 324) via a global-range RF network (112) when it is determined that the nomadic device (104) and the vehicle-installed telematics unit (102) are approximately beyond said second proximity and approximately within a third proximity.

12. The method (300) of claim 11 further comprising the step of providing a fob (114) configured to communicate with the vehicle-installed telematics unit (102) and the nomadic device (104), wherein said fob (114) comprises security data for authorizing said communication between the nomadic device (104) and the vehicle-installed telematics unit (102).

13. The method (300) of claims 11 or 12, wherein at least one of said short-range RF network (108) is a BLUETOOTH™ network, and said global-range RF network (112) is a cellular network.

14. The method (300) of claims 11 or 12, wherein said short-range RF network (108) is a first priority communication path, said medium-range RF network (110) is a second priority communication path, and said global-range RF network (112) is a third priority communication path.

15. The method (300) of claims 11 or 12, wherein said nomadic device (104) comprises at least one of a cellular telephone, a smartphone, a personal digital assistant (PDA), a laptop, and a personal computer.
